# EUROPEAN PATENT APPLICATION

(11) **EP 4 513 677 A1**
(43) Date of publication of application: **26.02.2025**
(21) Application number: 23914439.7
(22) Date of filing: 29.11.2023
(51) Int. Cl.: H01Q 1/36

(54) **RADIATION UNIT AND BASE STATION ANTENNA**

(30) Priority: 05.01.2023 CN 202310014331
(71) Applicant: CICT Mobile Communication Technology Co., Ltd., Canglong Island, Jiangxia District Wuhan, Hubei 430205 (CN)
(72) Inventor: CHENG, Wei, Wuhan, Hubei 430205 (CN); FAN, Xionghui, Wuhan, Hubei 430205 (CN)
(74) Representative: Studio Torta S.p.A.
(86) International application number: PCT/CN2023/135017
(87) International publication number: WO 2024/146305

(57) **Abstract**

Provided in the invention are a radiation unit and a base station antenna comprising the radiation unit. The radiation unit is used for being arranged on a reflecting plate to form a base station antenna, and comprises: two linear polarization oscillator groups, wherein the two linear polarization oscillator groups are orthogonal polarized and are integrally arranged, and each linear polarization oscillator group comprises at least three symmetric oscillators. The working frequencies of all the symmetric oscillators are in the same frequency band.

## Description

### CROSS-REFERENCES TO RELATED APPLICATIONS

The present application claims priority to Chinese patent application No. 202310014331X filed on January 05, 2023, entitled "Radiation Unit and Base Station Antenna", which is hereby incorporated by reference in its entirety.

### FIELD

The present application relates to the field of communication technologies, and in particular, to a radiation unit and a base station antenna.

### BACKGROUND

With the rapid development of mobile communication services, different operators have different system standards and construction progresses. Station addresses for same antenna panel need to be equipped with many antennas of different system standards. To reduce the complexity of a system and construction and maintenance costs of operators, it is urgently required to decrease the number of base station antennas or reduce outline sizes of base station antennas. Meanwhile, complex electromagnetic environments such as densely populated urban buildings have increasingly higher requirements for antenna coverage performance, such as gain, horizontal beam width and other radiation performance indicators.

Traditional antennas are mostly designed to solve a problem of gain by increasing a size in a vertical direction, or to solve a problem of beam width convergence by increasing a size or boundary in a horizontal direction. Although a system coverage effect is improved, such base station antennas are generally larger in size, heavier in weight and more expensive. A contradiction between a miniaturization of the outline size and a high requirement for a radiation performance indicator seriously restricts the development of base station antennas.

### BRIEF SUMMARY

The present application provides a radiation unit, used to be disposed at a reflection plate to form a base station antenna, including:
two linear polarization dipole groups, where dipoles in the linear polarization dipole group are mutually orthogonal and integrated, each of the linear polarization dipole groups includes at least three symmetric dipoles, and operating frequencies of all the symmetric dipoles are in a same frequency band.

In some embodiments, a plurality of symmetric dipoles are nested and mounted at the reflection plate.

In some embodiments, the two linear polarization dipole groups include a first linear polarization dipole group and a second linear polarization dipole group, where the first linear polarization dipole group includes a first symmetric dipole, a second symmetric dipole and a third symmetric dipole, and the second linear polarization dipole group includes a fourth symmetric dipole, a fifth symmetric dipole and a sixth symmetric dipole,
where the first symmetric dipole, the second symmetric dipole, the fourth symmetric dipole and the fifth symmetric dipole are arranged in a circular array to form a bowl-shaped radiator, the third symmetric dipole and the sixth symmetric dipole are connected to form a cross-shaped radiator, and the cross-shaped radiator is coaxially nested in the bowl-shaped radiator.

In some embodiments, a projection of the cross-shaped radiator on the reflection plate is within a projection range of the bowl-shaped radiator on the reflection plate.

In some embodiments, the radiation unit further includes:
a base, where each symmetric dipole is equipped with a balun and connected to the base through the balun, and the base is integrally formed with the two linear polarization dipole groups.

In some embodiments, the base includes a first connection portion and a second connection portion, the first symmetric dipole, the second symmetric dipole, the fourth symmetric dipole and the fifth symmetric dipole are respectively connected to the first connection portion through the baluns, the first connection portion is connected to the baluns of the third symmetric dipole and the sixth symmetric dipole in a circumferential manner, and the baluns of the third symmetric dipole and the sixth symmetric dipole are connected to the first connection portion through the second connection portion.

In some embodiments, a maximum size of an orthographic projection of the radiation unit on the reflection plate is 0.4 to 0.7 times of an operating wavelength corresponding to an operating frequency of the radiation unit, the operating frequency is a center frequency of a range of the operating frequency, and the operating wavelength is a wavelength in vacuum corresponding to the center frequency.

In some embodiments, a maximum vertical height of a radiation arm of the radiation unit relative to the reflection plate is 0.3 to 0.7 times of an operating wavelength corresponding to an operating frequency of the radiation unit.

In some embodiments, the radiation unit is one of an integrated die-cast structure, a printed circuit board structure, a sheet metal bend structure, a patch array structure, a liquid crystal polymer (LCP) structure, or a poly phenylene sulfide (PPS) industrialized liquid crystal polymer structure.

In some embodiments, a low frequency operating frequency range of each symmetric dipole is 615 MHz to 960 MHz or a subset thereof;
or an intermediate frequency operating frequency range of each symmetric dipole is 1427 MHz to 2700 MHz or a subset thereof;
or a high frequency operating frequency range of each symmetric dipole is 3200 MHz to 3800 MHz, or 4000 MHz to 5000 MHz, or 5925 MHz to 7125 MHz or a subset thereof.

The present application further provides a base station antenna, including a plurality of array units arranged in an M×N matrix, where the plurality of array units include at least one of the above-mentioned radiation units, and the radiation units are arranged in a Q×P matrix,
where M, N are integers greater than or equal to 1, P, Q are integers greater than or equal to 1, P and Q are not zero at the same time, Q is less than or equal to M, and P is less than or equal to N.

In some embodiments, the base station antenna further includes phase shifters, and all symmetric dipoles of a linear polarization dipole group are connected to outputs of a plurality of phase shifters in a one-to-one correspondence.

In some embodiments, the base station antenna further includes a power divider and a phase shifter, where an input of the power divider is connected to an output of the phase shifter, and all symmetric dipoles of a linear polarization dipole group are connected to an output of the power divider.

In some embodiments, the base station antenna further includes a power divider, a first phase shifter and a second phase shifter, an input of the power divider is connected to an output of the first phase shifter, one part of symmetric dipoles of a linear polarization dipole group are connected to an output of the power divider, and another part of the symmetric dipoles are connected to outputs of a same number of second phase shifters in a one-to-one correspondence.

Details of one or more embodiments of the present invention are set forth in the accompanying drawings and the description below. Other features, objects, and advantages of the invention would become apparent from description, drawings and claims.

### BRIEF DESCRIPTION OF THE DRAWINGS

To illustrate solutions in the present application more clearly, drawings required for the description of the embodiment is briefly introduced below. It should be noted that the drawings described below are some embodiments of the present application and other drawings may be obtained for those skilled in the art based on these drawings without creative work.
FIG. 1 is a three-dimensional schematic structural diagram of a radiation unit according to the present application;
FIG. 2 is a top view of a radiation unit according to the present application;
FIG. 3 is a side view of a radiation unit according to the present application;
FIG. 4 is a simulation comparison curve diagram of a radiation pattern of a radiation unit according to the present application;
FIG. 5 is a first topological principle diagram of an antenna array in the related art;
FIG. 6 is a second topological principle diagram of the antenna array in the related art;
FIG. 7 is a first topological principle diagram of an antenna array in a base station antenna according to the present application;
FIG. 8 is a second topological principle diagram of an antenna array in a base station antenna according to the present application;
FIG. 9 is a third topological principle diagram of an antenna array in a base station antenna according to the present application;
FIG. 10 is a first topological principle diagram of a feed network of a base station antenna according to the present application;
FIG. 11 is a second topological principle diagram of a feed network of a base station antenna according to the present application; and
FIG. 12 is a third topological principle diagram of a feed network of a base station antenna according to the present application.

### DETAILED DESCRIPTION

To illustrate the objectives, solutions and advantages of the application, the solutions in the present application are described clearly and completely below in combination with the drawings in the application. The described embodiments are part of the embodiments of the application, not all of them. All other embodiments obtained by those skilled in the art based on the embodiments of the present application without creative effort belong to the scope of the present application.

In the description of the embodiments of the present application, it should be noted that the shape, orientation or positional relationships indicated by terms such as "bowl-shaped", "cross-shaped", "nested", "inside", "outside", "upper", "lower", etc. are based on the shape, orientation or positional relationship shown in the drawings, and are merely for the convenience of describing the present application and simplifying the description, rather than indicating or implying that the device or unit stated must have a particular shape, orientation, is constructed and operated in a particular orientation, and thus is not to be construed as limiting the present application. Unless otherwise specified and defined, the terms "first" to "tenth" are used to clearly indicate the numbering of product components and do not represent any substantial difference. "A plurality of" means two or more, "and/or" means at least one of connected objects, and the character "/" generally means that associated objects are in an "or" relationship.

In the description of the present application, it should be noted that unless otherwise explicitly specified and defined, the terms "mounted", "connected to" and "connected" shall be understood broadly, for example, it may be either fixedly connected or detachably connected, or may be integrated; it may be either mechanically connected, or electrically connected; or it may be either directly connected, or indirectly connected through an intermediate medium, or it may be internal communication between two components. The specific meanings of the terms above in the present application may be understood by a person skilled in the art based on specific conditions.

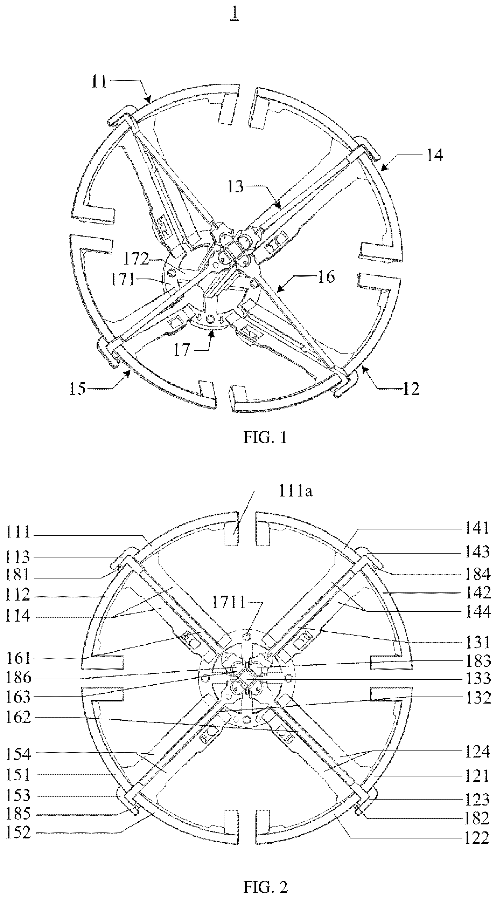

A radiation unit and a base station antenna of the present application are described below in conjunction with FIG. 1 to FIG. 12.

A radiation unit 1 provided by the embodiment of the present application is used to be disposed at the reflection plate 6 to form a base station antenna. As shown in FIG. 1, the radiation unit 1 includes two linear polarization dipole groups. The two linear polarization dipole groups are mutually polarized orthogonally and integrated, and each linear polarization dipole group includes at least three symmetric dipoles. A plurality of symmetric dipoles of the radiation unit 1 are nested and mounted at the reflection plate 6. Operating frequencies of all the symmetric dipoles are in a same frequency band.

It should be noted that a projection range of one part of the symmetric dipoles on the reflection plate 6 may be included in a projection range of another part of the symmetric dipoles on the reflection plate 6.

As shown in FIG. 2, a third symmetric dipole 13 and a sixth symmetric dipole 16 form a cross-shaped radiator, and a first symmetric dipole 11, a second symmetric dipole 12, a fourth symmetric dipole 14 and a fifth symmetric dipole 15 form a bowl-shaped radiator. The cross-shaped radiator and the bowl-shaped radiator are coaxially disposed at a plane where the reflection plate 6 is located, and the cross-shaped radiator and the bowl-shaped radiator may be disposed at a same height in a height direction perpendicular to the reflection plate 6, or may be disposed at different heights. A projection range of the cross-shaped radiator on the reflection plate 6 may be included in a projection range of the bowl-shaped radiator on the reflection plate 6, or the projection range of the bowl-shaped radiator on the reflection plate 6 may be included in the projection range of the cross-shaped radiator on the reflection plate 6. For another example, in case that the radiation unit 1 is a patch dipole structure, the bowl-shaped radiator and the cross-shaped radiator are located at the same plane, and the bowl-shaped radiator is disposed around the cross-shaped radiator.

The radiation unit 1 in this embodiment may be a ±45° linear polarization radiation unit, the symmetric dipoles of one linear polarization dipole group are all +45° polarized, and the symmetric dipoles of the other linear polarization dipole group are all +45° polarized. It should be noted that the radiation unit 1 may also be a radiation unit with two linear polarization directions of horizontal polarization and vertical polarization or other linear polarization directions. The embodiment of the present application describes the principle and functionality of the ±45° linear polarization radiation unit 1.

The number of symmetric dipoles of the two linear polarization dipole groups may be the same or different. In principle, all symmetric dipoles of any linear polarization dipole group may be half-wave dipoles or full-wave dipoles, or one part of the symmetric dipoles are half-wave dipoles and another part of the symmetric dipoles are full-wave dipoles.

For example, both the two linear polarization dipole groups have three half-wave dipoles. For another example, both of the two linear polarization dipole groups have three full-wave dipoles. For another example, one linear polarization dipole group has four half-wave dipoles, and the other linear polarization dipole group has four half-wave dipoles and one full-wave dipole.

Operating frequency ranges of all symmetric dipoles are the same, that is, all symmetric dipoles operate at low frequency, or all symmetric dipoles operate at intermediate frequency, or all symmetric dipoles operate at high frequency. The low frequency refers to a frequency range below 1000 MHz. The intermediate frequency refers to the frequency range between 1000 MHz and 3000 MHz. The high frequency refers to the frequency range above 3000 MHz.

The low frequency operating frequency range of each symmetric dipole in the radiation unit 1 of the embodiment of the present application is 615 MHz to 960 MHz or a subset thereof. Or, the intermediate frequency operating frequency range of each symmetric dipole is 1427 MHz to 2700 MHz or a subset thereof. Or, the high frequency operating range of each symmetric dipole is 3200 MHz to 3800 MHz or 4000 MHz to 5000 MHz or 5925 MHz to 7125 MHz or a subset thereof.

For example, when the radiation unit 1 operates in the low frequency range of 615 MHz to 960 MHz, all of its symmetric dipoles may operate in 615 MHz to 960 MHz, or may operate in a subset of this frequency range. For another example, one part of the symmetric dipoles of the linear polarization dipole group operates in 703 MHz to 960 MHz, and another part of the symmetric dipoles operates in 885 MHz to 960 MHz. The intermediate frequency or the high frequency may also be designed similarly to achieve corresponding functions.

All symmetric dipoles of the two linear polarization dipole groups are disposed in a certain arrangement, so that one part of the symmetric dipoles is arranged to form a circular array, and another part of the symmetric dipoles are nested in the circular array. That is, one part of the symmetric dipoles are disposed around another part of the symmetric dipoles.

The radiation unit provided by the embodiment of the present application not only has excellent performance indicators such as gain and bandwidth convergence, but also can reduce the size of the radiation unit 1, thereby realizing the miniaturization of the base station antenna. When the radiation unit 1 is applied to the base station antenna, different radiation patterns may be achieved, and higher radiation performances such as gain and bandwidth convergence are achieved by adjusting excitation amplitudes and excitation phases corresponding to each symmetric dipole. In addition, the integrated radiation unit has high reliability and convenient installation, which improves the installation efficiency and installation accuracy, and is conducive to ensuring performance indicators of the radiation unit.

All symmetric dipoles of the two linear polarization dipole groups are integrated, that is, all symmetric dipoles are integrated in a connected, combined or assembled manner. For example, the radiation unit 1 is one of an integrated die-cast structure, a printed circuit board structure, a sheet metal bend structure, a patch array structure, a liquid crystal polymer (LCP) structure, or a poly phenylene sulfide (PPS) industrialized liquid crystal polymer structure.

In some embodiments of the present application, the two linear polarization dipole groups include a first linear polarization dipole group and a second linear polarization dipole group. The first linear polarization dipole group includes a first symmetric dipole 11, a second symmetric dipole 12 and a third symmetric dipole 13. The second linear polarization dipole group includes a fourth symmetric dipole 14, a fifth symmetric dipole 15 and a sixth symmetric dipole 16. The first symmetric dipole 11, the second symmetric dipole 12, the fourth symmetric dipole 14 and the fifth symmetric dipole 15 are arranged in a circular array to form a bowl-shaped radiator, and the third symmetric dipole 13 and the sixth symmetric dipole 16 are connected to form a cross-shaped radiator. The cross-shaped radiator is coaxially nested in the bowl-shaped radiator.

As shown in FIG. 1 to FIG. 3, an outline of the radiation unit 1 is a combination of a bowl-shaped radiator and a cross-shaped radiator. The first symmetric dipole 11 and the second symmetric dipole 12 are disposed oppositely, the fourth symmetric dipole 14 and the fifth symmetric dipole 15 are disposed oppositely, the third symmetric dipole 13 and the sixth symmetric dipole 16 are mutually orthogonal, and all the six symmetric dipoles are half-wave dipoles. The first symmetric dipole 11 and the second symmetric dipole 12 are respectively located at both sides of the third symmetric dipole 13, and the fourth symmetric dipole 14 and the fifth symmetric dipole 15 are respectively located at both sides of the sixth symmetric dipole 16. All the first symmetric dipole 11, the second symmetric dipole 12 and the third symmetric dipole 13 are +45° polarized, and all the fourth symmetric dipole 14, the fifth symmetric dipole 15 and the sixth symmetric dipole 16 are -45°polarized.

An integrated structure of the bowl-shaped radiator and the cross-shaped radiator in this embodiment may be produced in a batch through a process of die-cast and draft molding. A die-cast direction is an axial direction of the radiation unit 1, which is conducive to improving the consistency of the performance indicators of the radiation unit 1.

The first symmetric dipole 11 includes a first radiation arm 111 of the first symmetric dipole, a second radiation arm 112 of the first symmetric dipole, a feed patch 113 of the first symmetric dipole, and a balun 114 of the first symmetric dipole. The two radiation arms are connected to the balun 114 of the first symmetric dipole and fed through the feed patch 113 of the first symmetric dipole to achieve amplitude phase control. The feed patch 113 of the first symmetric dipole is connected to a phase shifter of the feed network through a first coaxial feeder 181.

The second symmetric dipole 12 includes a first radiation arm 121 of the second symmetric dipole, a second radiation arm 122 of the second symmetric dipole, a feed plate 123 of the second symmetric dipole, and a balun 124 of the second symmetric dipole. The two radiation arms are connected to the balun 124 of the second symmetric dipole and fed through the feed patch 123 of the second symmetric dipole to achieve amplitude phase control. The feed patch 123 of the second symmetric dipole is connected to the phase shifter of the feed network through a second coaxial feeder 182.

The third symmetric dipole 13 includes a first radiation arm 131 of the third symmetric dipole, a second radiation arm 132 of the third symmetric dipole, a feed patch 133 of the third symmetric dipole, and a balun 134 of the third symmetric dipole. The two radiation arms are connected to the balun 134 of the third symmetric dipole and fed through the feed patch 133 of the third symmetric dipole to achieve amplitude phase control. The feed plate patch of the third symmetric dipole is connected to the phase shifter of the feed network through a third coaxial feeder 183.

The fourth symmetric dipole 14 includes a first radiation arm 141 of the fourth symmetric dipole, a second radiation arm 142 of the fourth symmetric dipole, a feed patch 143 of the fourth symmetric dipole, and a balun 144 of the fourth symmetric dipole. The two radiation arms are connected to the balun 144 of the fourth symmetric dipole and fed through the feed patch 143 of the fourth symmetric dipole to achieve amplitude phase control. The feed patch 143 of the fourth symmetric dipole is connected to the phase shifter of the feed network through a fourth coaxial feeder 184.

The fifth symmetric dipole 15 includes a first radiation arm 151 of the fifth symmetric dipole, a second radiation arm 152 of the fifth symmetric dipole, a feed patch 153 of the fifth symmetric dipole, and a balun 154 of the fifth symmetric dipole. The two radiation arms are connected to the balun 154 of the fifth symmetric dipole and fed through the feed patch 153 of the fifth symmetric dipole to achieve amplitude phase control. The feed patch 153 of the fifth symmetric dipole is connected to the phase shifter of the feed network through a fifth coaxial feeder 185.

The sixth symmetric dipole 16 includes a first radiation arm 161 of the sixth symmetric dipole, a second radiation arm 162 of the sixth symmetric dipole, a feed patch 163 of the sixth symmetric dipole, and a balun 164 of the sixth symmetric dipole. The two radiation arms are connected to the balun 164 of the sixth symmetric dipole and fed through the feed patch 163 of the sixth symmetric dipole to achieve amplitude phase control. The feed plate 163 of the sixth symmetric dipole is connected to the phase shifter of the feed network through a sixth coaxial feeder 186.

Two radiation arms of each symmetric dipole are used to radiate electromagnetic waves, and the balun is used to achieve impedance matching. An outer conductor of the coaxial feeder matched with the feed patch is connected to the outer conductor of the corresponding balun, and a core wire is connected to corresponding two radiation arms to achieve balanced feeding of the symmetric dipole, and then achieve impedance matching.

The radiation unit provided by the embodiment of the present application further includes a base 17, each symmetric dipole is equipped with a balun and connected to the base 17 through the balun, and the base 17 is integrally formed with the two linear polarization dipole groups. The base 17 is equipped with a mount hole 1711, and the radiation unit 1 may be mounted and connected to the reflection plate 6 through a fastener penetrating the mount hole 1711.

In some optional embodiments, the base 17 includes a first connection portion 171 and a second connection portion 172. The first symmetric dipole 11, the second symmetric dipole 12, the fourth symmetric dipole 14 and the fifth symmetric dipole 15 are respectively connected to the first connection portion 171 through the baluns. The first connection portion 171 is connected to the baluns of the third symmetric dipole 13 and the sixth symmetric dipole 16 in a circumferential manner, and the baluns of the third symmetric dipole 13 and the sixth symmetric dipole 16 are connected to the first connection portion 171 through the second connection portion 172.

Specifically, the first connection portion 171 is a ring-shaped structure, and the second connection portion 172 is a cross-shaped structure. The second connection portion 172 is located at an inner side of the first connection portion 171 and connected to the first connection portion 171. The baluns of all symmetric dipoles of the bowl-shaped radiator are connected to the first connection portion 171 in a circumferential manner, and the baluns of the two symmetric dipoles of the cross-shaped radiator are connected to the second connection portion 172. The mount hole 1711 is disposed at the first connection portion 171. For example, a plurality of mount holes 1711 are evenly spaced and disposed at the first connection portion 171.

Furthermore, the first linear polarization dipole group further includes a seventh symmetric dipole and an eighth symmetric dipole, and the second linear polarization dipole group further includes a ninth symmetric dipole and a tenth symmetric dipole. The seventh symmetric dipole, the eighth symmetric dipole, the ninth symmetric dipole and the tenth symmetric dipole are arranged in a circular array to form another bowl-shaped radiator, and the two bowl-shaped radiators are coaxially nested, and the outline of the radiation unit 1 is a combination of two bowl-shaped radiators and a cross-shaped radiator. By disposing two nested bowl-shaped radiators, a radiation aperture of the radiation unit 1 may be further reduced under same performance indicator requirements. A projection of an inner bowl-shaped radiator on the reflection plate 6 is within a projection range of an outer bowl-shaped radiator on the reflection plate 6.

Structures of the seventh symmetric dipole, the eighth symmetric dipole, the ninth symmetric dipole and the tenth symmetric dipole are similar to the structure of the first symmetric dipole 11 mentioned above, and would not be repeated here. Other bowl-shaped radiators may be further disposed outside the bowl-shaped radiator to expand the number of symmetric dipoles, and required performance indicators such as gain and wavelength convergence may be achieved by increasing or decreasing the number of nested bowl-shaped radiators. It should be noted that the radiation unit 1 may not include a cross-shaped radiator, and only two or more bowl-shaped radiators nested in sequence may be disposed.

In some optional embodiments, a projection of the cross-shaped radiator on the reflection plate 6 is within a projection range of the bowl-shaped radiator on the reflection plate 6. It may be understood that the projection size of the radiation unit 1 on the reflection plate 6 is equal to the projection size of the bowl-shaped radiator on the reflection plate 6, and is greater than the projection size of the cross-shaped radiator on the reflection plate 6.

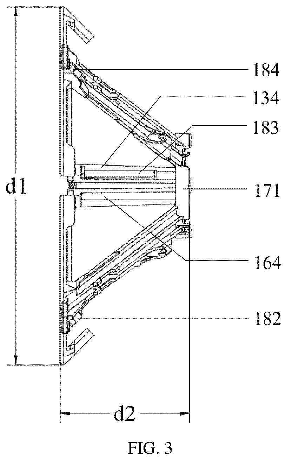

As shown in FIG. 3, a maximum size of the orthographic projection of the radiation unit 1 on the reflection plate 6 is d1, that is, an orthographic projection size of the bowl-shaped radiator on the reflection plate 6. The shape of the orthographic projection of the radiation unit 1 on the reflection plate 6 may be circular, or may be other shapes such as square or rectangle. For example, d1 of the radiation unit 1 in FIG. 3 is an equivalent circular diameter of the orthographic projection of the outer bowl-shaped radiator on the reflection plate 6, which is approximately equal to 0.5 times of a sum of the equivalent circular diameters of the orthographic projections of the cross-shaped radiator and the bowl-shaped radiator on the reflection plate 6. By adopting an array group mode of the radiation unit 1 of the embodiment of the present application, the size of the base station antenna may be greatly reduced under same performance indicator requirements, or high-gain radiation performance may be achieved in case that a physical space size remains basically unchanged.

Each symmetric dipole of the radiation unit 1 is equipped with a radiation arm, and each radiation arm is connected to the reflection plate 6 through a balun. As shown in FIG. 3, a maximum vertical height of the radiation arm of the radiation unit 1 relative to the reflection plate 6 is d2, and d2 is equivalent to a height of the corresponding balun relative to the reflection plate 6.

It may be understood that d2 is a maximum value of a vertical height size of radiation arms of all symmetric dipoles of the radiation unit 1 relative to the reflection plate 6. For example, a vertical height size of the radiation arm of the fourth symmetric dipole 14 relative to the reflection plate 6 is the maximum value of a vertical height dimension of radiation arms of all symmetric dipoles of the radiation unit 1 relative to the reflection plate 6, and then d2 represents this size. Optionally, vertical heights of the radiation arms of all symmetric dipoles relative to the reflection plate 6 are equal, that is, all symmetric dipoles have a common radiation plane.

It should be noted that each radiation arm and balun of the radiation unit 1 corresponds to an electrical length. While ensuring that electrical lengths of each radiation arm are equal and electrical lengths of each balun are also equal, the shape of the radiation unit 1 is limited to three-dimensional space of d1 and d2. In this three-dimensional space, the number of symmetric dipoles may be disposed as needed, such as the mutually nested cross-shaped radiators and bowl-shaped radiators in the above implementation, or the mutually nested cross-shaped radiators and two bowl-shaped radiators in the above embodiment.

A maximum size d1 of the orthographic projection of the radiation unit 1 on the reflection plate 6 of the embodiment of the present application is 0.4-0.7 times of an operating wavelength corresponding to an operating frequency of the radiation unit 1. A maximum vertical height d2 of the radiation arm of the radiation unit 1 relative to the reflection plate 6 is 0.3-0.7 times of the operating wavelength corresponding to the operating frequency of the radiation unit 1. The operating frequency is a center frequency of a range of the operating frequency, and the operating wavelength is the wavelength in vacuum corresponding to the center frequency.

For any linear polarization dipole group in the radiation unit 1, it includes at least three symmetric dipoles, that is, a small array of at least three units. According to the pattern multiplication principle in the antenna, in case that unit patterns are the same, the more units there are, the higher the unit gain, the narrower the beam width in the array direction, and the more convergent the pattern is. Therefore, under a condition of the same physical outline size, the radiation performance indicators such as the gain and horizontal half-power beam width of the radiation unit 1 of this embodiment are significantly superior to those of traditional general radiation units, such as bowl-shaped radiation units at low frequency or cross-shaped radiation units at low frequency. In case of the same radiation performance, both the antenna array and the outline size are miniaturized.

In some optional embodiments, ends of the two radiation arms of each symmetric dipole of the bowl-shaped radiator are respectively equipped with extension potions extending downward, and the extension potions may be used to adjust electrical lengths of radiation currents of the bowl-shaped radiator located inside and the bowl-shaped radiator located outside, to ensure that electrical lengths of radiation currents of symmetric dipoles in the two bowl-shaped radiators are equal. Meanwhile, the projection size of the bowl-shaped radiator on the reflection plate 6 may be reduced, which is conducive to the miniaturization of the radiation unit 1.

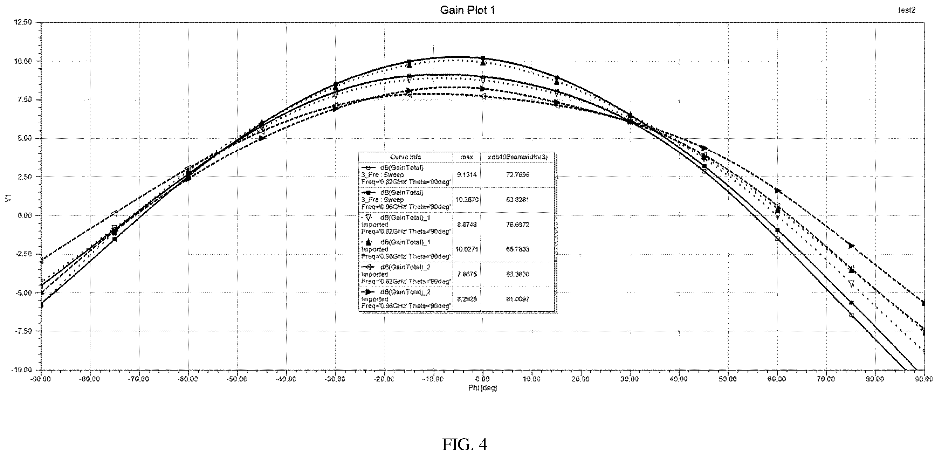

In the embodiment of the present application, radiation patterns of the radiation unit 1, the bowl-shaped radiation unit 2 at low frequency and the cross-shaped radiation unit 3 at low frequency in a same low frequency range are compared and analyzed, where the bowl-shaped radiation unit 2 at low frequency has the same structure as the low frequency bowl-shaped radiator of the radiation unit 1, and the cross-shaped radiation unit 3 at low frequency has the same structure as the low frequency cross-shaped radiator of the radiation unit 1. FIG. 4 shows a simulation comparison curve diagram of radiation patterns of the three radiation units. A solid line with a hollow rectangular box and a solid line with a solid rectangular box represent a curve of the radiation pattern of the radiation unit 1 respectively, a dotted line with hollow triangles in up and down directions and a dotted line with solid triangles in up and down directions represent a curve of the radiation pattern of the bowl-shaped radiation unit 2 at low frequency respectively, and a short horizontal line with hollow triangles in left and right directions and a short horizontal line with solid triangles in left and right directions represent a curve of the radiation pattern of the cross-shaped radiation unit 3 at low frequency respectively.

It is obvious from the curves that gains of radiation unit 1 operating at 0.82 GHz and 0.96 GHz are 9.1314 dB and 10.2670 dB respectively, gains of bowl-shaped radiation unit 2 at low frequency operating at 0.82 GHz and 0.96 GHz are 8.8748 dB and 10.0271 dB respectively, and gains of cross-shaped radiation unit 3 at low frequency operating at 0.82 GHz and 0.96 GHz are 7.8675 dB and 8.2929 dB respectively. A gain indicator of the radiation pattern of the radiation unit 1 is higher than those of the bowl-shaped radiation unit 2 at low frequency and cross-shaped radiation unit 3 at low frequency, whose gains at 0.82 GHz are higher by 0.2566 dB and 1.2639 dB, and gains at 0.96 GHz are higher by 0.2399 dB and 1.9741 dB.

Horizontal half-power beam widths of the radiation unit 1 at frequencies of 0.82 GHz and 0.96 GHz are 72.7696 degrees and 63.8281 degrees respectively, horizontal half-power beam widths of the bowl-shaped radiation unit 2 at low frequency at frequencies of 0.82 GHz and 0.96 GHz are 76.6972 degrees and 65.7833 degrees respectively, and horizontal half-power beam widths of the cross-shaped radiation unit 3 at low frequency at frequencies of 0.82 GHz and 0.96 GHz are 88.3630 degrees and 81.0097 degrees respectively. A horizontal half-power beam width indicator of the radiation pattern of radiation unit 1 is more convergent than those of bowl-shaped radiation unit 2 at low frequency and cross-shaped radiation unit 3 at low frequency, that is, a data range of the beam width is smaller. The horizontal half-power beam width at 0.82 GHz converges to 3.9276 degrees and 11.6658 degrees respectively, and the horizontal half-power beam width at 0.96 GHz converges to 1.9552 degrees and 17.1816 degrees respectively.

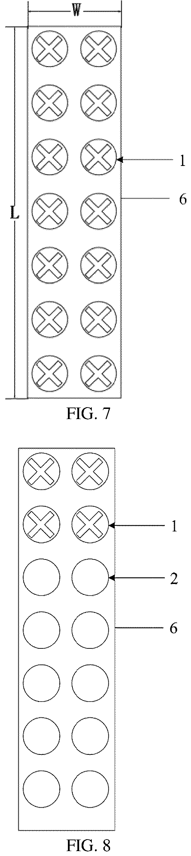

An embodiment of the present application further provides a base station antenna, as shown in FIG. 7 to FIG. 9, the base station antenna includes a plurality of array units arranged in an M×N matrix. The plurality of array units include at least one radiation unit 1 as described in any of the above embodiments, and the radiation unit 1 is arranged in a Q×P matrix. M, N are integers greater than or equal to 1, P, Q are integers greater than or equal to 1, P and Q are not zero at the same time, Q is less than or equal to M, and P is less than or equal to N, that is, there is at least one radiation unit 1 in the array unit of M rows and N columns.

It may be understood that a plurality of array units are arranged to form an antenna array, and the array units may be arranged with equal row spacing and/or equal column spacing, or may be arranged with unequal row spacing and unequal column spacing, and may be arranged in a straight line or non-straight line topology. The radiation unit 1 is arranged in Q rows and P columns to form a subarray of the antenna array, and the subarray is any Q rows and P columns in the antenna array, that is, it may be adjacent Q rows and P columns, or it may be non-adjacent Q rows and P columns.

Further, the base station antenna further includes at least one radiation unit 4 at high frequency disposed at the reflection plate 6, and each radiation unit 4 at high frequency is used as an array unit, and/or, the base station antenna further includes at least one multi-frequency radiation unit group 5 disposed at the reflection plate 6, and each multi-frequency radiation unit group 5 serves as an array unit.

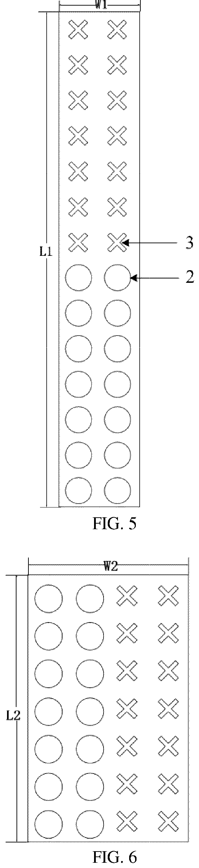

FIG. 5 shows a topological schematic diagram of a traditional antenna array. An array topology of the bowl-shaped radiation unit 2 at low frequency at a lower end of the antenna is two columns and seven rows, and an array topology of the cross-shaped radiation unit 3 at low frequency at an upper end of the antenna is two columns and seven rows. The radiation units shown in this figure are arranged at the reflection plate 6 according to a certain array topology, where a length of the reflection plate 6 is L1 and a width of the reflection plate 6 is W1.

FIG. 6 shows another topological schematic diagram of a traditional antenna array. An array topology of the bowl-shaped radiation unit 2 at low frequency at a left side of the antenna is two columns and seven rows, and an array topology of the cross-shaped radiation unit 3 at low frequency at a right side of the antenna is two columns and seven rows. These radiation units are arranged at the reflection plate 6 according to a certain array topology, where a length of the reflection plate 6 is L2 and a width of the reflection plate 6 is W2.

As shown in FIG. 5 and FIG. 6, in case that the row spacing and column spacing of units of the antenna array are the same, the length L1 of the reflection plate 6 in FIG. 5 is significantly greater than the length L2 of the reflection plate 6 in FIG. 6, and the antenna length L1 is about twice of L2. The width W2 of the reflection plate 6 in FIG. 6 is significantly greater than the length W1 of the reflection plate 6 in FIG. 5, and the antenna width W2 is about twice of W1. It may be seen that in case that the number of required array units and the row and column spacing of the array units are the same, length or width direction of the antenna has a disadvantage of being too long or too wide.

It may be seen from the pattern curve shown in FIG. 4 that radiation parameters such as the gain and horizontal beam width of the radiation unit 1 of the embodiment of the present application are superior to those of the bowl-shaped radiation unit 2 at low frequency. According to the pattern multiplication principle in the antenna, a pattern of the array is equal to a pattern of a unit multiplied by an array factor, where the array factor refers to an array parameter such as an array unit spacing. In case that the array factor such as the array unit spacing are determined, the pattern of the antenna array composed of the radiation unit 1 would also be superior to the pattern of the antenna array composed of the bowl-shaped radiation unit 2 at low frequency. Therefore, under the condition of satisfying certain antenna array performance indicators, the size of the antenna may be miniaturized, low-cost and lightweight through a smaller number of array units or unit spacing.

FIG. 7 shows a topological principle diagram of an antenna array using the radiation unit 1 of the embodiment of the present application. The radiation unit 1 is disposed at the reflection plate 6 in seven rows and two columns based on a designed unit row spacing and column spacing. The length of the reflection plate 6 is L and the width is W. By comparing FIG. 5 and FIG. 6, it may be seen that in case that the number of required array units and the unit row and column spacing are the same, and both of them are arranged in two columns and seven rows, the antenna length L shown in FIG. 7 is shorter than the antenna length L1 shown in FIG. 5, where L is approximately equal to half of L1, and the antenna width W shown in FIG. 7 is narrower than the antenna width W2 shown in FIG. 6, where W is approximately equal to half of W2. The size of the antenna is greatly reduced.

FIG. 8 shows a topological principle diagram of another antenna array using the radiation unit 1 of the embodiment of the present application. Array units of the antenna array are disposed at the reflection plate 6 in seven rows and two columns, i.e., M=7, N=2. The radiation units 1 are arranged in two rows and two columns to form a subarray of the antenna array, i.e., Q=2, P=2. The subarray is any two rows and two columns in the antenna array, i.e., it may be two adjacent rows and two columns, or it may be two non-adjacent rows and two columns.

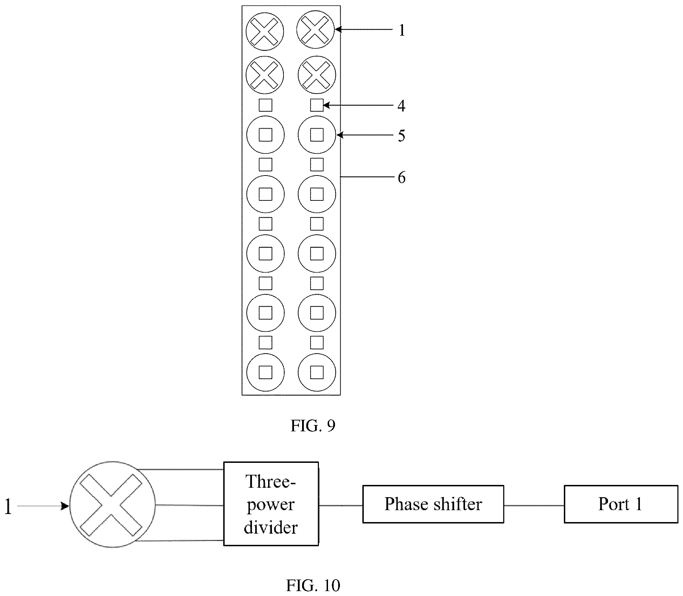

FIG. 9 shows a topological principle diagram of still another antenna array using the radiation unit 1 of the embodiment of the present application. Array units of the antenna array are disposed at the reflection plate 6 in twelve rows and two columns, i.e., M=12, N=2. The radiation units 1 are arranged in two rows and two columns to form a subarray of the antenna array, i.e., Q=2, P=2. The subarray is any two rows and two columns in the antenna array, i.e., it may be two adjacent rows and two columns, or it may be two non-adjacent rows and two columns. The bowl-shaped radiation units 2 at low frequency are arranged in an array of five rows and two columns, and the radiation units 4 at high frequency are arranged in an array of ten rows and two columns, where some radiation units 4 at high frequency are nested and assembled with the bowl-shaped radiation unit 2 at low frequency to form a multi-frequency radiation unit group 5.

According to the pattern multiplication principle in the antenna, the pattern of the radiation unit 1 using a two-column and two-row array is obviously superior to the pattern of the bowl-shaped radiation unit 2 at low frequency using a two-column and two-row array. The pattern of the antenna array shown in FIG. 7 is obviously superior to the pattern of the antenna array shown in FIG. and FIG. 9. In practice, a corresponding number of radiation units 1 may be selected as needed to form any subarray, that is, a subarray with a row number and a column number less than or equal to the row number and a column number of the antenna array of the whole machine, to improve the pattern performance indicator.

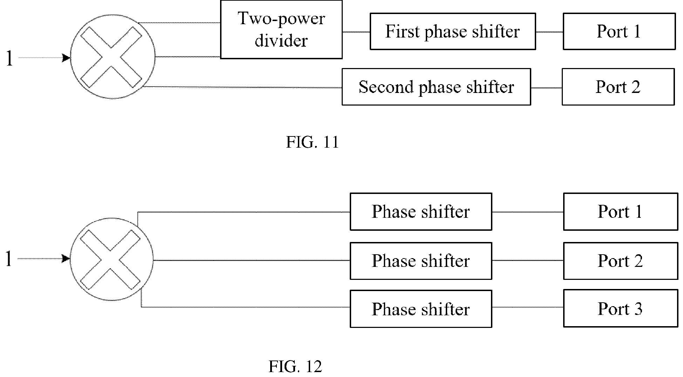

In some optional embodiments, as shown in FIG. 12, the base station antenna further includes phase shifters, and all symmetric dipoles of the linear polarization dipole group are connected to the outputs of a plurality of phase shifters in a one-to-one correspondence.

In some optional embodiments, as shown in FIG. 10, the base station antenna further includes a power divider and a phase shifter, an input of the power divider is connected to an output of the phase shifter, and all the symmetric dipoles of a linear polarization dipole group are respectively connected to an output of the power divider.

In some optional embodiments, as shown in FIG. 11, the base station antenna further includes a power divider, a first phase shifter, and a second phase shifter, an input of the power divider is connected to an output of the first phase shifter, one part of the symmetric dipoles of the linear polarization dipole group are respectively connected to an output of the power divider, and the other part of the symmetric dipoles are connected to outputs of the second phase shifters in a one-to-one correspondence.

This embodiment provides three topology principle diagrams of a feed network of the antenna array using the radiation unit 1 of the embodiment of the present application, to realize three different topology connections of the feed network to achieve different functional requirements. In order to clearly illustrate the topology principle of the feed network of the base station antenna of the embodiment of the present application, a linear polarization dipole group including three symmetric dipoles is used as a specific example.

The feed network connection method shown in FIG. 10 is used to control different amplitudes or phases of the radiation unit 1, to realize patterns with different gains or horizontal beam width. Three coaxial feeders of any linear polarization dipole group of the radiation unit 1 are connected to a same three-power divider, and are connected to the phase shifter through the three-power divider. The phase shifter is connected to a port 1 corresponding to a polarization direction. For example, the first coaxial feeder 181, the second coaxial feeder 182 and the third coaxial feeder 183 are respectively connected to an output of the three-power divider, so as to realize the feeding of different amplitudes or phases of the feed network, and then realize the different radiation performance of the radiation unit 1.

The feed network connection mode shown in FIG. 11 is used to realize the frequency division multiplexing of the radiation unit 1. In principle, the radiation unit 1 is divided into a bowl-shaped radiation unit 2 at low frequency and a cross-shaped radiation unit 3 at low frequency, that is, the frequency is divided into two low frequency operating ranges, and the two feed networks may be controlled independently. The two coaxial feeders of any linear polarization dipole group of the radiation unit 1 are connected to the same two-power divider, the two-power divider is connected to the first phase shifter, and the first phase shifter is connected to the port 1 corresponding to the polarization direction; the other coaxial feeder of the same linear polarization dipole group is connected to the second phase shifter, and the second phase shifter is connected to a port 2 corresponding to a polarization direction. For example, the first coaxial feeder 181 and the second coaxial feeder 182 are connected to the two-power divider, and the third coaxial feeder 183 is connected to the second phase shifter to multiplex the radiation unit 1, the feed network is independently adjusted, and the port 1 and the port 2 multiplex the radiation unit 1. There is only one set of antenna arrays, which miniaturizes the size of the antenna, simplifies the feed network, and realizes the low cost and light weight of the antenna.

The feed network connection method shown in FIG. 12 is used to realize frequency division multiplexing of the radiation unit 1. In principle, any linear polarization dipole group of the radiation unit 1 is divided into three radiation units, for example, the first symmetric dipole 11, the second symmetric dipole 12 and the third symmetric dipole 13, that is, the frequency range is divided into three low frequency operating ranges, and the three feed networks may be controlled independently. The three coaxial feeders of any linear polarization dipole group of the radiation unit 1 are respectively connected to three phase shifters, and are respectively connected to three ports through three phase shifters. For example, the first coaxial feeder 181, the second coaxial feeder 182 and the third coaxial feeder 183 are respectively connected to port 1, port 2 and port 3 through one phase shifter. Port 1, port 2 and port 3 multiplex the radiation unit 1, and there is only one set of antenna arrays, which miniaturizes the antenna size, simplifies the feed network, and realizes the low cost and light weight of the antenna.

It should be noted that FIG. 10 to FIG. 12 are three typical antenna arrays using the radiation unit 1. The embodiments of the present application are not limited to these three feed network forms, and other forms of feed networks may be flexibly set according to actual needs.

The base station antenna provided by the embodiment of the present application may achieve different radiation patterns by changing the amplitude and phase of the excitation of the linear polarization dipole group of the radiation unit 1 without changing the outline size, and achieve excellent performance such as high gain and convergence bandwidth, thereby realizing the miniaturization of the radiation unit and the antenna array.

Finally, it should be noted that the above embodiments are only used to explain the solutions of the present application, and are not limited thereto. Although the present application has been described in detail with reference to the foregoing embodiments, it should be understood by those skilled in the art that they may still modify the technical solutions documented in the foregoing embodiments and make equivalent substitutions to a part of the features; these modifications and substitutions do not make the essence of the corresponding solutions depart from the scope of the solutions of various embodiments of the present application.

## Claims

1. A radiation unit, used to be disposed at a reflection plate to form a base station antenna, comprising:
two linear polarization dipole groups, wherein dipoles in the linear polarization dipole group are mutually orthogonal and integrated, each of the linear polarization dipole groups comprises at least three symmetric dipoles, and operating frequencies of all the symmetric dipoles are in a same frequency band.

2. The radiation unit of claim 1, wherein a plurality of symmetric dipoles are nested and mounted at the reflection plate.

3. The radiation unit of claim 1, wherein the two linear polarization dipole groups comprise a first linear polarization dipole group and a second linear polarization dipole group, wherein the first linear polarization dipole group comprises a first symmetric dipole, a second symmetric dipole and a third symmetric dipole, and the second linear polarization dipole group comprises a fourth symmetric dipole, a fifth symmetric dipole and a sixth symmetric dipole,
wherein the first symmetric dipole, the second symmetric dipole, the fourth symmetric dipole and the fifth symmetric dipole are arranged in a circular array to form a bowl-shaped radiator, the third symmetric dipole and the sixth symmetric dipole are connected to form a cross-shaped radiator, and the cross-shaped radiator is coaxially nested in the bowl-shaped radiator.

4. The radiation unit of claim 3, wherein a projection of the cross-shaped radiator on the reflection plate is within a projection range of the bowl-shaped radiator on the reflection plate.

5. The radiation unit of claim 3, further comprising:
a base, wherein each symmetric dipole is equipped with a balun and connected to the base through the balun, and the base is integrally formed with the two linear polarization dipole groups.

6. The radiation unit of claim 5, wherein the base comprises a first connection portion and a second connection portion, the first symmetric dipole, the second symmetric dipole, the fourth symmetric dipole and the fifth symmetric dipole are respectively connected to the first connection portion through the baluns, the first connection portion is connected to the baluns of the third symmetric dipole and the sixth symmetric dipole in a circumferential manner, and the baluns of the third symmetric dipole and the sixth symmetric dipole are connected to the first connection portion through the second connection portion.

7. The radiation unit of claim 1, wherein a maximum size of an orthographic projection of the radiation unit on the reflection plate is 0.4 to 0.7 times of an operating wavelength corresponding to an operating frequency of the radiation unit, the operating frequency is a center frequency of a range of the operating frequency, and the operating wavelength is a wavelength in vacuum corresponding to the center frequency.

8. The radiation unit of claim 1, wherein a maximum vertical height of a radiation arm of the radiation unit relative to the reflection plate is 0.3 to 0.7 times of an operating wavelength corresponding to an operating frequency of the radiation unit.

9. The radiation unit of claim 1, wherein the radiation unit is one of an integrated die-cast structure, a printed circuit board structure, a sheet metal bend structure, a patch array structure, a liquid crystal polymer (LCP) structure, or a poly phenylene sulfide (PPS) industrialized liquid crystal polymer structure.

10. The radiation unit of claim 1, wherein a low frequency operating frequency range of each symmetric dipole is 615 MHz to 960 MHz or a subset thereof;
or an intermediate frequency operating frequency range of each symmetric dipole is 1427 MHz to 2700 MHz or a subset thereof;
or a high frequency operating frequency range of each symmetric dipole is 3200 MHz to 3800 MHz, or 4000 MHz to 5000 MHz, or 5925 MHz to 7125 MHz or a subset thereof.

11. A base station antenna, comprising a plurality of array units arranged in an M×N matrix, wherein the plurality of array units comprise at least one of the above-mentioned radiation units, and the radiation units are arranged in a Q×P matrix,
wherein M, N are integers greater than or equal to 1, P, Q are integers greater than or equal to 1, P and Q are not zero at the same time, Q is less than or equal to M, and P is less than or equal to N.

12. The base station antenna of claim 11, further comprising phase shifters, wherein all symmetric dipoles of a linear polarization dipole group are connected to outputs of a plurality of phase shifters in a one-to-one correspondence.

13. The base station antenna of claim 11, further comprising a power divider and a phase shifter, wherein an input of the power divider is connected to an output of the phase shifter, and all symmetric dipoles of a linear polarization dipole group are connected to an output of the power divider.

14. The base station antenna of claim 11, further comprising a power divider, a first phase shifter and a second phase shifter, wherein an input of the power divider is connected to an output of the first phase shifter, one part of symmetric dipoles of a linear polarization dipole group are connected to an output of the power divider, and another part of the symmetric dipoles are connected to outputs of a same number of second phase shifters in a one-to-one correspondence.
